# EUROPEAN PATENT SPECIFICATION

(11) **EP 3 161 214 B1**
(45) Date of publication and mention of the grant of the patent: **13.09.2017**
(21) Application number: 15739013.9
(22) Date of filing: 19.06.2015
(51) Int. Cl.: E01F 7/00, D07B 1/18, F16G 11/14

(54) **AN ANCHOR FOR SYSTEMS FOR PROTECTION AGAINST FALLING MASSES**
ANKER FÜR SYSTEME ZUM SCHUTZ VOR HERABSTÜRTZENDEN MASSEN
ANCRE POUR SYSTÈMES DE PROTECTION CONTRE MASSES EN CHUTE LIBRE

(30) Priority: 27.06.2014 IT VR20140176
(43) Date of publication of application: 03.05.2017
(73) Proprietor: MGTEC S.r.l., 38015 Trento (IT)
(72) Inventor: AGOSTINI, Norma, I-38017 Trento (IT)
(74) Representative: Anselmi, Davide
(86) International application number: PCT/IB2015/054623
(87) International publication number: WO 2015/198195

(56) References cited:
- EP-A1- 1 428 936
- WO-A1-2011/018195
- WO-A1-2012/078056
- WO-A1-2013/171592
- US-A- 3 702 709
- US-A- 5 018 775

## Description

### Technical field

This invention relates to an anchor for systems for protection against falling masses, such as, for example, the falling of rocks or for avalanches and in all the situations in which a protection against the falling of a mass is required.

More specifically, this invention is intended for the field of installations for implementing the safety of roadways passing through natural slopes subject to the phenomena of falling masses, landslides and/or snow slides or for implementing safety at construction sites for building infrastructures such as bridges, viaducts, tunnels.

This invention also lends itself to temporary applications for implementing safety against the falling of masses for example in an area of foundation excavations for civil engineering purposes or in a new area of extraction inside a quarry.

The anchors for the protection systems substantially allow connection of a metallic structure or the like with the ground in order to promote the transfer of loads from the structure to the ground. In this way, settlements and/or deformations are prevented which may render ineffective the protection offered by the metallic structure following a fall of rocks or during an avalanche or a landslide.

### Background art

In the prior art, a safety anchor comprises at least a portion of a cable wound in such a way as to form a loop, a protective sheath wound around the portion of the cable which forms the loop and at least a collar positioned transversely to the two stretches of the cable which form the anchor loop to prevent it from opening.

The cable is generally a spheroidal steel cable made using a twist of wires wrapped with the above-mentioned trend.

The sheath is generally a pipe which is also metallic that is fitted on the portion of cable set up to form the loop whilst the containment collar is also a metallic element (open in bands or closed like a pipe).

A known safety anchor also comprises a mechanical protection element, that is to say, a mechanical element which is designed to stiffen and maintain the shape of the hole of the loop especially when the anchor is subjected to a stress equal to or even greater than the predetermined value.

In the prior art, the most commonly used protective element is the thimble also known for lifting systems. The thimble is a mechanical element made by shaping a piece of metal formed with two curves. Very briefly, the thimble in the first shaping step has a curvature having a transversal cross-section in the shape of a "U" for the entire length of the piece; in the final shaping step the piece is bent back on itself according to a closed drop-like shape, according to which the first curvature in the shape of a "U" has the opening facing outwards. This configuration is designed especially to house the stretch of cable set up to form the anchoring loop. In other words, the protective thimble is inserted inside the anchoring loop and it defines the hole through which the fixing means are inserted, such as, as for example, the fixing pin of a shackle or a cable or a bundle of anchoring cables. An example of such prior art is disclosed in document EP1428936.

In the prior art, the anchor for systems for protection against falling masses is subject to certain drawbacks which limit the performance in terms of load-bearing capacity, increase the installation costs and also reduce the life cycle of the anchor.

It is known that the thimble inserted inside the loop is subjected to permanent deformation which sometimes makes its replacement necessary because its squashing causes a concentrated distribution of the forces. The formation of concentrated loads on one or more points of the anchoring cable can cause a cutting of a part of the wires which form the spheroidal cable, triggering a dangerous weakening of the cable leading to an instantaneous and unforeseeable collapse.

The thimble is also subject to a marked deformation in the presence of fixing means with a rather reduced resistant section. In other words, the thimble associated with a fixing pin with a reduced diameter (by way of example, for a pin diameter of approximately 25 mm) tends to deform such that the total failure load of the safety anchor does not exceed 65% of twice the failure load of the individual anchor cable.

In this regard, prior art teaches the use of a cable for making an anchor which has a greater cross section than that nominally specified, so as to guarantee a greater resistant section and therefore a failure load of the anchor which is higher, but at the expense however of the greater cost and weight that this solution generally results in. Since it is necessary to make a cable with a cross section greater than that theoretically necessary to withstand the predetermined loads, the prior art anchors therefore have a high cost both in terms of materials and transport of the cable to the installation area because it is heavier and bulkier. Attention is to be paid in particular to the installation of systems for protection against falling masses constructed in mountainous or inaccessible areas which can generally only be reached by helicopter: an increase in the weight of the load to be transported by the helicopter results in a direct increase in the transport costs (in effect, one often speaks of "payload" in the technical jargon for air transport).

Another drawback of known anchors is the corrosion to which all the main elements of the anchor are subjected, since they are exposed to the weather for the entire life cycle. The corrosion of the anchor implies the use of stainless steel and, where this is not possible, a protective coating treatment both for the cable and the thimble.

### Disclosure of the Invention

An aim of this invention is to provide an anchor for systems for protection against falling masses which is effective both in terms of mechanical protection and from the point of view of corrosion protection.

Another aim of this invention is to provide an anchor for systems for protection against falling masses with limited deformability which allows greater use of the mechanical strength of the anchor so as to reach higher failure loads than that reached by the prior art.

A further and different aim of this invention is to provide an anchor which, under equal conditions of tensile failure loads, has a lower total weight and a lower cost even for its transport and installation.

### Brief description of drawings

Further features and advantages of the invention are more apparent in the non-limiting description which follows of a preferred non-limiting embodiment of an anchor for systems for protection against falling masses, as illustrated in the accompanying drawings, in which:

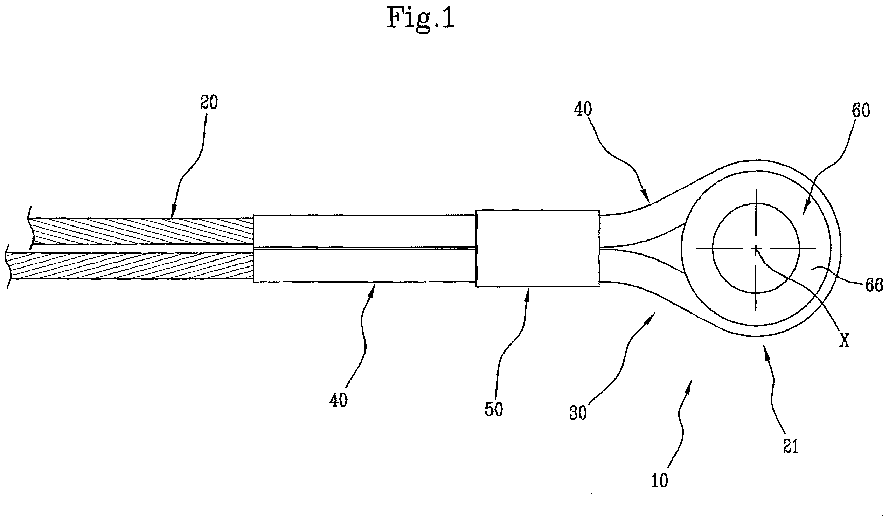

- Figure 1 is a schematic plan view of the anchor according to this invention;
- Figure 2 is a schematic side view of the anchor of Figure 1;
- Figure 3 is a schematic perspective view of a mechanical protection element according to this invention;
- Figure 4 is a cross section of the element of Figure 3;
- Figure 5 is a graph showing a result of load tests performed on several anchor samples comprising the anchor of Figure 1 and the result of which is indicated with the term "Anchor A".

### Description of at least a preferred embodiment

With reference to the accompanying drawings, according to this invention, an anchor 10 for systems for protection against falling masses comprises an anchoring cable 20 having a portion 21 designed to form at least one anchoring loop 30.

Preferably, the anchor 10 comprises a protective sheath 40 wrapped around the portion 21 of the anchoring cable 20.

Preferably, the protective sheath 40 extends for a length equal to the portion 21 of cable 20 touched by the anchoring loop 30. The aim of the protective sheath 40 is to give a protection against corrosion of the anchoring part which remains above ground.

The anchor 10 comprises at least a containment collar 50 such as to wrap transversely around the cable 20 and the sheath, if present, in a position adjacent to the anchoring loop 30.

The anchor 10 also comprises a mechanical protection element 60 positioned between the anchoring cable 20 and fixing means in such a way as to evenly distribute the stresses between the fixing means and the cable 20, in an operating condition of the anchor 10.

Preferably, the mechanical the protective element 60 is made of a metal material, still more preferably, the mechanical protection element 60 is made of S235 steel (formerly Fe360), or higher.

In order to increase the protection against corrosion by the weather conditions and mechanical contact/rubbing with other elements, the mechanical protective element 60 might have an anti-corrosion surface treatment, for example high-penetration hot galvanising.

Advantageously, the mechanical protective element 60 made with a metal such as that mentioned above makes it possible to obtain an anti-corrosion surface treatment by hot galvanising with a protection thickness equal to or greater than approximately 55 µm.

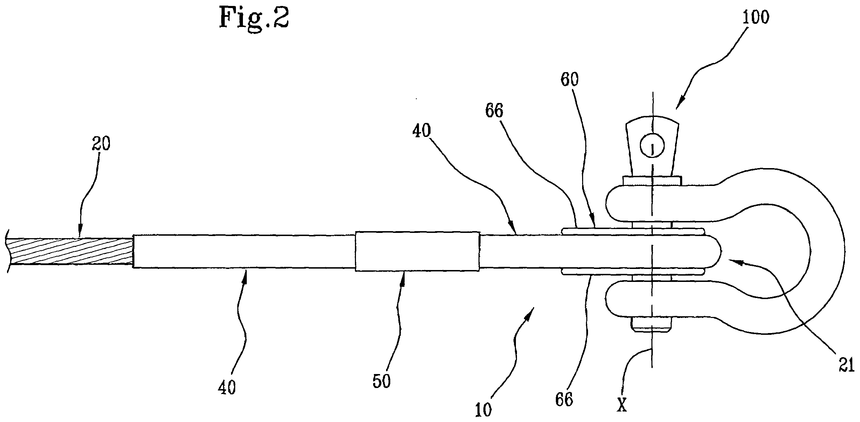

Figure 2 shows, by way of example, a side view of an anchor 10 wherein the fixing means comprise a pin 100 positioned inside the anchoring loop 30. The fixing pin 100 is at least partly in contact with the mechanical protective element 60.

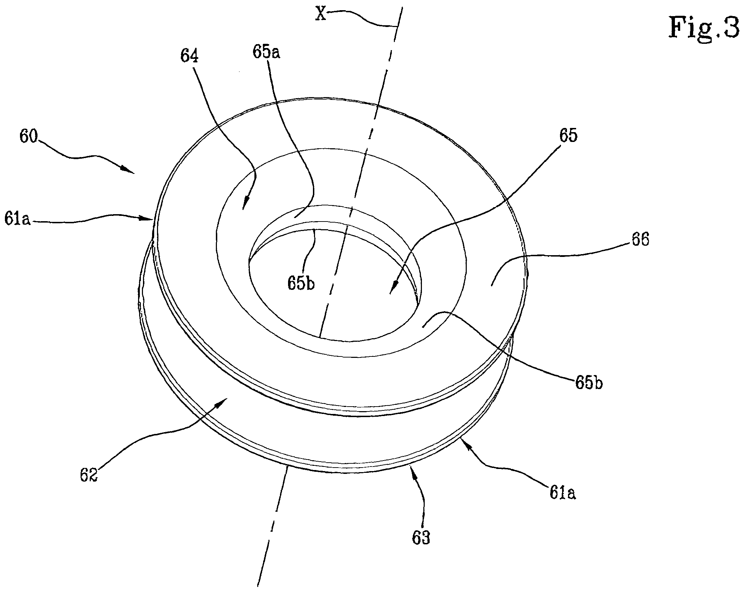

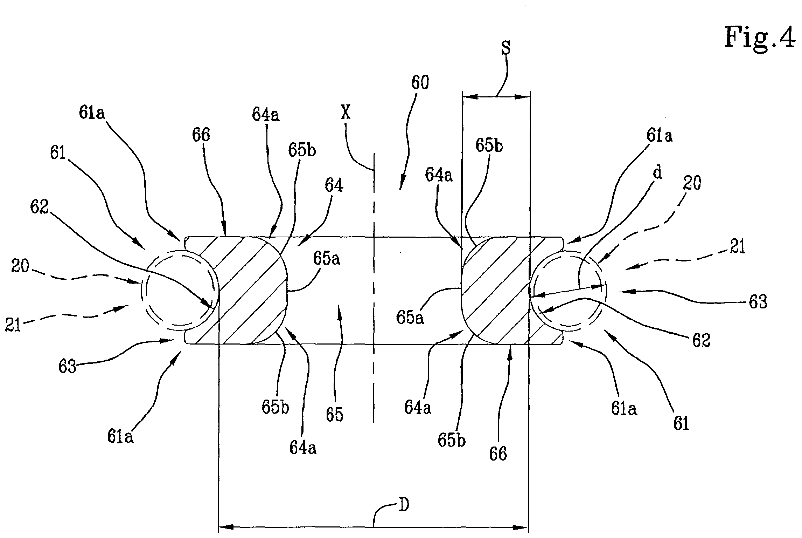

Advantageously, the mechanical protective element 60 is an annular element having a housing portion 61. More specifically, the housing portion 61 is formed by an annular groove 62 positioned along a perimetric surface 63 of the mechanical protective element 60 (Figures 3 and 4). The mechanical protection element 60 also has a constraining portion 64 having a through hole 65 designed to house the fixing means.

The housing portion 61 is designed to house at least partly the portion 21 of the anchoring cable 20 set up to form the anchoring loop 30. More specifically, the annular groove 62 is shaped with a curvature such as to a match, when it comes into contact, the cross section of the anchoring cable 20, as shown for example in the cross section of Figure 4.

The mechanical protection element 60 is axially symmetric relative to an axis of symmetry "X".

Preferably, the housing portion 61 and the constraining portion 64 are centred and symmetrical relative to the axis of symmetry "X". In other words, the mechanical protective element 60 is an annular element which has both the through hole 65 and the annular groove 62 concentric and coaxial with the axis of symmetry "X".

The through hole 65 preferably has a diameter between a value of approximately 45 mm and approximately 90 mm, even more preferably a value between approximately 50 mm and approximately 70 mm. Preferably, the through hole 65 has a surface portion 65a cylindrical in shape with a constant diameter for its entire extension along a direction parallel to the axis of symmetry "X".

In other words, the surface portion 65a extends about the axis of symmetry "X" in such a way as to form the through hole 65.

More specifically, the surface portion 65a cylindrical in shape is coaxial with the axis of symmetry "X".

Preferably, the surface portion 65a cylindrical in shape has a diameter of between approximately 45 mm and approximately 90 mm, even more preferably a diameter between approximately 50 mm and approximately 70 mm.

Preferably, the mechanical protective element 60 has two flat lateral surfaces 66 parallel with one another and positioned perpendicularly the axis of symmetry "X".

The lateral surfaces 66 are such as to define for the housing portion 61 and for the constraining portion 64 respective lateral ends 61a and 64a.

Advantageously, at the lateral end 64a of the constraining portion 64, the through hole 65 has respective connecting surfaces 65b such as to create a unique and continuous connection between the surface portion 65a cylindrical in shape and the lateral surfaces 66.

In other words, the constraining portion 64 has, at the relative lateral ends 64a, connecting surfaces 65b between the through hole 65 and the lateral surfaces 66, having a predetermined curvature.

Advantageously, the connecting surfaces 65b are such as to comprise continuous curves and not corners or sharp edges.

In other words, the surface portion 65a has, along a direction parallel to the axis of symmetry "X", curved lateral edges (rounded or bevelled) and not corners or sharp edges. In yet other words, the lateral ends 64a define the curved lateral edges.

Preferably, the connecting surfaces 65b have a curvilinear shape derived from an arc of a circle having a radius of curvature which is between approximately 5 mm and approximately 25 mm, even more preferably between approximately 10 mm and approximately 20 mm.

For this reason, the through hole 65 has curved lateral portions defined by the connecting surfaces 65b and a cylindrical stretch defined by the central surface portion 65a of the through hole 65. A cross section view of an example of the trend of the through hole 65 is illustrated in Figure 4. Advantageously, the through hole 65 is designed to house without any precaution or limitation of use the fixing pin 100 (for example the rigid pin of a shackle) or a bundle of anchoring cables.

Advantageously, the complete absence of sharp edges at the lateral ends 64a of the constraining portion 64 prevents a concentration of forces on the fixing means. More specifically, when the fixing means consist of one or more cables, the curved lateral portions defined by the connecting surfaces 65b prevent concentrated bends and deformations on the cable; when the fixing means consist of a pin, the cylindrical stretch defined by the central surface portion 65a of the hole 65 allows a homogeneous distribution of the load.

With reference to the housing portion 61, the annular groove 62 extends along the perimetric surface 63 about the axis of symmetry "X". More specifically, a base of the annular groove 62 has a diameter "D" of extension between a value of approximately 60 mm and a value of approximately 140 mm. The term "base" means the area of the annular groove 62 having a smaller diameter.

Preferably, the diameter "D" of greater extension is between two and ten times larger, preferably between 4.5 and 7.5 times larger, than the diameter in cross section of the anchoring cable 20.

In other words, the ratio between the diameter "D" of extension of the annular groove 62 and the diameter in cross-section of the anchoring cable 20 is such that it always keeps in tension without deformations (reduction in area of the neck of the loop) the portion 21 of the cable 20 set up to form the loop 30 (especially the portion 21 between the mechanical protective element 60 and the neck 50), in an operating condition of use of the anchor 10.

Advantageously, the mechanical protective element 60 is annular and closed and guarantees - even in combination with the remaining features described previously - a uniform distribution of the stress to the benefit of a greater resistance to the load. Moreover, the reduced deformability of the mechanical protective element 60 guarantees an easy replacement (removal) of the fixing means, especially when the later comprise the pin of a shackle.

Moreover, the mechanical protective element 60 has a relative minimum thickness "S" measured at the groove 62 radially relative to the axis of symmetry "X". The mechanical protection element 60 is sized so that the ratio between the minimum thickness S and the diameter "d" of cable is between 0.65 and 1.5. For example, the minimum thickness "S" varies from 9mm to 33mm whilst the diameter "d" of the cable varies between 14mm and 24mm.

In other words, the mechanical protective element 60 has a respective minimum cross section area through a section plane radial to the axis of symmetry "X". The mechanical protection element 60 is sized so that the ratio between the minimum section area and the section area of the cable is between 11 and 23. For example, the minimum cross section area varies between 1300mm² and 7700mm² whilst the cross section area of the cable varies between 115mm² and 340mm².

The process adopted to perform the tensile loading tests on the anchor 10 and on the known anchors, until total failure of the anchor, is described briefly below. For this reason, the tests performed on the anchor samples are of the invasive type and it has been necessary to cause the destruction/yielding of the samples.

The process explained below, purely by way of a non-limiting example, relates to a monotone traction test. The test is not aimed at estimating the resistance of the anchor construed as device used for the construction of works for protection against falling masses for which it is necessary to take into consideration also the resistance between the anchor and the injection grout - known as the bulb - and between the bulb and the ground. The tensile test is performed considering an anchor with a length of approximately 1.5 metres, having, at of the two free ends of the cable, a fixing system obtained by forming a spelter socket (which joins the two ends of the cable) and which has, at the other end, an anchoring loop 30 obtained by the winding the cable on the mechanical protection element 60, as described above. The spelter socket is similar to that used in the embodiment of the ends of bridge stays. The anchoring device is inserted in the test machine, connecting it, on one side, using the spelter socket and, on the other side, by a connecting pin inserted in the mechanical protection device 60. The test speed adopted is conventionally equal to 2 mm/s in line with that proposed by the ETAG 27 guide lines for tests on the three-link chains of meshes for rockfall barriers.

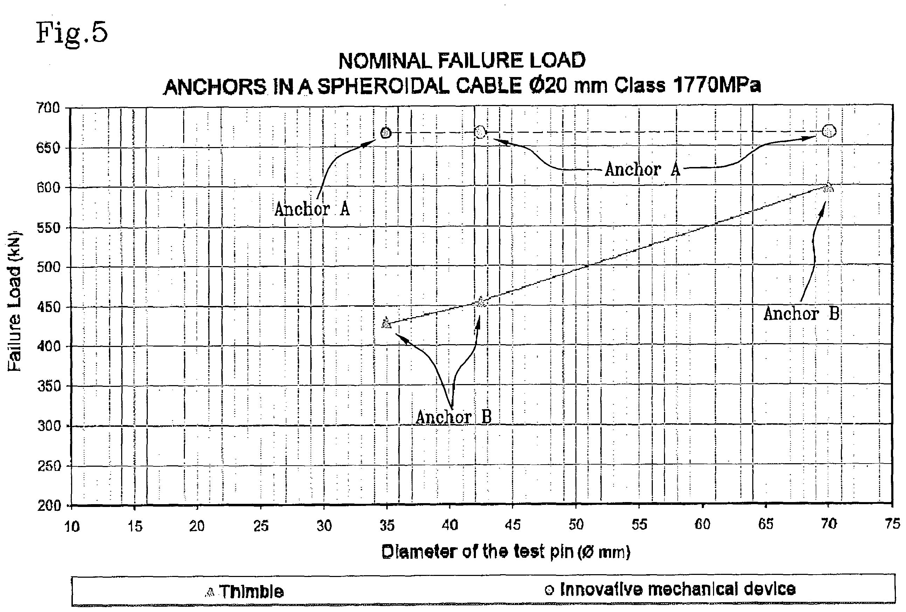

Figure 5 shows a graph relative to a series of tensile loading tests as a function of the diameter of the fixing pin with the aim of comparing the anchor 10 according to this invention with prior art anchors. In all the types of anchors tested, the cable used to form the loop has a diameter in cross-section of 20 mm.

During the tensile loading tests the diameter of the fixing means (in particular of the fixing pin) varies from a diameter of approximately 35 mm to approximately 70 mm.

More specifically, the term "Anchor A" denotes the values recorded in the tensile loading tests of the anchor 10 according to this invention, during which the fixing pin had a diameter, respectively, of approximately 35 mm, 42 mm and 70 mm.

In line with what is known in the prior art, the anchor with the shaped steel thimble ("Anchor B") is vulnerable and subject to deformations of the loop; the same tensile tests have been performed for this anchor, that is to say, again with a fixing pin with a diameter, respectively, of approximately 35 mm, 42 mm and 70 mm.

The prior art anchor ("Anchor B") withstood a tensile load up to failure which increased in proportion to the increase in the diameter of the fixing pin (see trend line in Figure 5). More specifically, it should be noted that even in the presence of the fixing pin with maximum diameter, the failure load was approximately 600 kN.

Advantageously, the tensile loading tests up to failure of the anchor 10 according to this invention ("Anchor A") provided an average failure value of approximately 670 kN, even in the presence of the fixing pin having a minimum diameter. In other words, it surprisingly emerged that the increase in the failure load value of the anchor according to this invention ("Anchor A") in the presence of the pin of minimum diameter was approximately 50% greater than the failure load value of a traditional anchor ("Anchor B") in the presence of the minimum diameter pin. Advantageously, it has surprisingly emerged from the above-mentioned experimental tests that the value of the tensile failure load of the anchor 10 is not very sensitive, if not completely independent of, the variation in the value of the diameter of the fixing means (fixing pin) used.

It should be noted that the above description of the experimental tensile loading tests is by way of a non-limiting example of the inventive concept of this invention; different numerical values can therefore be obtained depending on the standard used to perform the structural tests but which reflect the behaviour and the features of this invention if compared with that measured similarly on prior art anchors.

Advantageously, summing up, by the combined effect of two or more of the features described above:
a) starting from a predetermined failure load value and the use of a fixing pin with a reduced diameter (for example by approximately 25 mm), the anchor 10 according to this invention allows a cable 20 to be used with a diameter less than the cable of a known anchor used under the same operating conditions;
b) on the basis of point a), under the same failure load value, the anchor 10 according to this invention allows a reduction to be made in the weight of transport and, therefore, the cost of transport, for example if carried out by helicopter, of all the elements (cable 20, collars 50, sheaths 40 etc.) needed to make a system for protection against falling masses;
c) the anchor 10 according to this invention, in the presence of a pin with minimum diameter, allows an increase in the value of the failure load of the anchor by approximately 50% compared with the failure load value of a traditional anchor;
d) the measurement of a resistant section of the fixing means associated with the constraining portion 64 and a tensile force applied to the portion 21 of the cable 20 are in relation with each other in a non-proportional manner; in other words, as may be inferred from Figure 5, the failure load is independent of the resistant section of the fixing means, in particular independent of the diameter of the pin used.

## Claims

1. An anchor (10) for systems for protection against falling masses, comprising:
- an anchoring cable (20) designed for making an anchoring loop (30) with at least one portion (21) of it;
- at least a containment collar (50) wrapped transversally to said anchoring cable (20) in a position adjacent to said anchoring loop (30);
- a mechanical protection element (60) designed to be positioned between said anchoring cable (20) and external fixing means in such a way as to evenly distribute the stresses between said fixing means and said cable (20) when the anchor (10) is being used, in an operating condition; the mechanical protection element (60) being made of a metallic material; **characterised in that** said mechanical protection element (60) is an annular element comprising:
- a housing portion (61) formed by an annular groove (62) positioned along a perimetric surface (63) of said annular element, said annular groove (62) being designed to at least partly accommodate said portion (21) of said anchoring cable (20),
- a constraining portion (64) comprising a through hole (65) designed to accommodate said external fixing means, said annular element being axially symmetric relative to an axis of symmetry ("X"), said constraining portion (64) and said housing portion (61) being centred and symmetrical relative to said axis of symmetry ("X"),
- a flat surface portion (65a) extending about the axis of symmetry ("X") to form said through hole (65);
- two lateral surfaces (66) located at the sides of the surface portion (65a) and respective connecting surfaces (65b) wherein each connecting surface (65b) is positioned between the flat surface portion (65a) and a respective lateral surfaces (66) to create a unique and continuous connection between the surface portion (65a) and the lateral surface (66); said connecting surfaces being continuous curves and not corners or sharp edges.

2. The anchor (10) according to claim 1, wherein the lateral surfaces (66) are flat and parallel with one another and positioned perpendicularly to said axis of symmetry ("X"), said lateral surfaces (66) forming respective lateral ends (64a, 61a) of said constraining portion (64) and said housing portion (61).

3. The anchor (10) according to any one of the preceding claims, wherein the surface portion (65a) is flat.

4. The anchor (10) according to any one of the preceding claims, wherein said surface portion (65a) is cylindrical and has a constant diameter, said surface portion (65a) being positioned coaxially with said axis of symmetry ("X").

5. The anchor (10) according to any one of the preceding claims, wherein said connecting surfaces (65b) are designed to create a connection between said surface portion (65a) and said lateral surfaces (66) at said lateral end (64a) of said constraining portion (64).

6. The anchor (10) according to any one of the preceding claims, wherein said connecting surfaces (65b) have a curvilinear shape with a radius of curvature which is preferably between approximately 5 mm and approximately 25 mm, even more preferably between approximately 10 mm and approximately 20 mm.

7. The anchor (10) according to any one of the preceding claims, wherein said through hole (65) has a diameter between a value of approximately 45 mm and approximately 90 mm, even more preferably a value between approximately 50 mm and approximately 75 mm.

8. The anchor (10) according to any one of the preceding claims, wherein said annular groove (62) extends along said perimetric surface (63) extending around said axis of symmetry ("X") and wherein said annular groove (62) comprises a base with a diameter of extension ("D") between a value of approximately 60 mm and a value of approximately 140 mm.

9. The anchor (10) according to any one of the preceding claims, wherein said annular groove (62) extends along said perimetric surface (63) and wherein said annular groove (62) comprises a base with a diameter of extension ("D") which is from two to ten times greater than the diameter in cross-section of said anchoring cable (20), preferably said diameter of extension ("D") being from 4.5 to 7.5 times greater than the diameter of said anchoring cable (20).

10. The anchor (10) according to any one of the preceding claims, wherein said mechanical protection element (60) is made of S235 steel or higher.

11. The anchor (10) according to claim 10, wherein said mechanical protection element (60) has a hot galvanised type anti-corrosion surface treatment, preferably being hot-galvanised to a protection thickness of more than approximately 55 µm.

12. The anchor (10) according to any one of the preceding claims, also comprising a protective sheath (40) wrapped around the outside of said portion (21) of said cable (20) and extending over a stretch such that it covers at least said anchoring loop (30).

13. The anchor (10) according to any one of the preceding claims, wherein said mechanical protection element (60) has a relative minimum thickness ("S") measured at the groove (62) radial to the axis of symmetry ("X"); said mechanical protection element (60) being sized so that the ratio between the minimum thickness ("S") and a diameter ("d") of the cable is between 0.65 and 1.5.

14. The anchor (10) according to any one of the preceding claims, wherein said mechanical protection element (60) has a respective minimum cross section area through a section plane radial to the axis of symmetry ("X"); said mechanical protection element (60) being sized so that the ratio between the minimum section area and the section area of the cable is between 11 and 23.

## Patentansprüche

1. Anker (10) für Systeme zum Schutz vor herabstürzenden Massen, umfassend:
- ein Ankerkabel (20), ausgestaltet, um eine Verankerungsschleife (30) mit mindestens einem Abschnitt (21) davon herzustellen;
- mindestens eine Halteschelle (50), quer um das Ankerkabel (20) gehüllt, in einer Position, die an die Verankerungsschleife (30) angrenzt;
- ein mechanisches Schutzelement (60), ausgestaltet um zwischen dem Ankerkabel (20) und externen Befestigungsmittel positioniert zu werden, sodass die Beanspruchungen zwischen den Befestigungsmitteln und dem Kabel (20) gleichmäßig verteilt werden, wenn der Anker (10) in einem Betriebszustand genutzt wird, wobei das mechanische Schutzelement (60) aus einem Metallmaterial hergestellt ist,
**dadurch gekennzeichnet, dass** das mechanische Schutzelement (60) ein ringförmiges Element ist, umfassend:
- einen Gehäuseabschnitt (61), ausgebildet durch eine ringförmige Nut (62), positioniert entlang einer umfangsseitigen Oberfläche (63) des ringförmigen Elements, wobei die ringförmige Nut (62) ausgestaltet ist, um den Abschnitt (21) des Ankerkabels (20) mindestens teilweise aufzunehmen;
- einen Spannabschnitt (64), umfassend ein Durchführungsloch (65), ausgestaltet, um die externen Befestigungsmittel aufzunehmen, wobei das ringförmige Element axial symmetrisch relativ zu einer Symmetrieachse ("X") angeordnet ist, wobei der Spannabschnitt (64) und der Gehäuseabschnitt (61) relativ zur Symmetrieachse ("X") zentriert und symmetrisch zu dieser ausgerichtet sind;
- einen flachen Oberflächenabschnitt (65a), der sich um die Symmetrieachse ("X") erstreckt, um das Durchführungsloch (65) zu bilden;
- zwei seitliche Oberflächen (66), die sich an den Seiten des Oberflächenabschnitts (65a) befinden und jeweilige Verbindungsoberflächen (65b), wobei eine jede Verbindungsoberfläche (65b) zwischen dem flachen Oberflächenabschnitt (65a) und einer jeweiligen seitlichen Oberfläche (66) positioniert ist, um eine einzige und durchgehende Verbindung zwischen dem Oberflächenabschnitt (65a) und der seitlichen Oberfläche (66) zu schaffen, wobei die Verbindungsoberflächen durchgehende Krümmungen und keine Ecken oder scharfen Kanten sind.

2. Anker (10) nach Anspruch 1, wobei die seitlichen Oberflächen (66) flach und parallel zueinander angeordnet und senkrecht zur Symmetrieachse ("X") angeordnet sind, wobei die seitlichen Oberflächen (66) jeweilige seitliche Enden (64a, 61a) des Spannabschnitts (64) und des Gehäuseabschnitts (61) bilden.

3. Anker (10) nach einem der vorhergehenden Ansprüche, wobei der Oberflächenabschnitt (65a) flach ist.

4. Anker (10) nach einem der vorhergehenden Ansprüche, wobei der Oberflächenabschnitt (65a) zylindrisch ist und einen konstanten Durchmesser aufweist, wobei der Oberflächenabschnitt (65a) koaxial zur Symmetrieachse ("X") positioniert ist.

5. Anker (10) nach einem der vorhergehenden Ansprüche, wobei die Verbindungsoberflächen (65b) ausgestaltet sind, um eine Verbindung zwischen dem Oberflächenabschnitt (65a) und den seitlichen Oberflächen (66) am seitlichen Ende (64a) des Spannabschnitts (64) zu schaffen.

6. Anker (10) nach einem der vorhergehenden Ansprüche, wobei die Verbindungsoberflächen (65b) eine krummlinige Form mit einem Krümmungsradius aufweisen, der vorzugsweise zwischen ungefähr 5 mm und ungefähr 25 mm beträgt, noch besser zwischen ungefähr 10 mm und ungefähr 20 mm.

7. Anker (10) nach einem der vorhergehenden Ansprüche, wobei das Durchführungsloch (65) einen Durchmesser zwischen einem Wert von ungefähr 45 mm und ungefähr 90 mm aufweist, vorzugsweise einen Wert zwischen ungefähr 50 mm und ungefähr 75 mm beträgt.

8. Anker (10) nach einem der vorhergehenden Ansprüche, wobei sich die ringförmige Nut (62) entlang der umfangsseitigen Oberfläche (63) erstreckt, sich erstreckend rund um die Symmetrieachse ("X"), und wobei die ringförmige Nut (62) eine Basis mit einem Ausdehnungsdurchmesser ("D") zwischen einem Wert von ungefähr 60 mm und einem Wert von ungefähr 140 mm umfasst.

9. Anker (10) nach einem der vorhergehenden Ansprüche, wobei sich die ringförmige Nut (62) entlang der umfangsseitigen Oberfläche (63) erstreckt und wobei die ringförmige Nut (62) eine Basis mit einem Ausdehnungsdurchmesser ("D") aufweist, der um das 2-bis 10-Fache größer ist als der Querschnittsdurchmesser des Ankerkabels (20), wobei der Ausdehnungsdurchmesser ("D") vorzugsweise um das 4,5-Fache bis 7,5-Fache größer ist als der Durchmesser des Ankerkabels (20).

10. Anker (10) nach einem der vorhergehenden Ansprüche, wobei das mechanische Schutzelement (60) aus Stahl S235 oder höher besteht.

11. Anker (10) nach Anspruch 10, wobei das mechanische Schutzelement (60) eine Korrosionsschutzoberflächenbehandlung vom Feuerverzinkungstyp aufweist und vorzugsweise auf eine Schutzdicke von mehr als 55 µm feuerverzinkt ist.

12. Anker (10) nach einem der vorhergehenden Ansprüche, zudem umfassend eine Schutzhülle (40), die um die Außenseite des Abschnitts (21) des Kabels (20) gehüllt ist und sich über ein Teilstück erstreckt, sodass sie mindestens die Verankerungsschleife (30) bedeckt.

13. Anker (10) nach einem der vorhergehenden Ansprüche, wobei das mechanische Schutzelement (60) eine relative Mindestdicke ("S"), gemessen an der Nut (62) radial zur Symmetrieachse ("X") aufweist, wobei das mechanische Schutzelement (60) so bemessen ist, dass das Verhältnis zwischen der Mindestdicke ("S") und einem Durchmesser ("d") des Kabels zwischen 0,65 und 1,5 beträgt.

14. Anker (10) nach einem der vorhergehenden Ansprüche, wobei das mechanische Schutzelement (60) einen jeweiligen Mindestquerschnittbereich durch eine Schnittebene radial zur Symmetrieachse ("X") aufweist, wobei das mechanische Schutzelement (60) so bemessen ist, dass das Verhältnis zwischen dem Mindestschnittbereich und dem Schnittbereich des Kabels zwischen 11 und 23 beträgt.

## Revendications

1. Ancre (10) pour systèmes de protection contre masses en chute libre, comprenant :
- un câble d'ancrage (20) conçu pour faire une boucle d'ancrage (30) avec au moins une partie (21) de celui-ci ;
- au moins un collier de contenance (50) enroulé transversalement sur ledit câble d'ancrage (20) dans une position adjacente à ladite boucle d'ancrage (30) ;
- un élément de protection mécanique (60) conçu pour être positionné entre ledit câble d'ancrage (20) et des moyens de fixation externes de manière à répartir uniformément les tensions entre lesdits moyens de fixation et ledit câble (20) lorsque l'ancre (10) est utilisée dans une condition de fonctionnement ; l'élément de protection mécanique (60) étant constitué d'un matériau métallique ;
**caractérisée en ce que** ledit élément de protection mécanique (60) est un élément annulaire comprenant :
- une partie de logement (61) formée par une rainure annulaire (62) positionnée le long d'une surface périphérique (63) dudit élément annulaire, ladite rainure annulaire (62) étant conçue pour au moins loger partiellement ladite partie (21) dudit câble d'ancrage (20),
- une partie de retenue (64) comprenant un trou passant (65) conçu pour loger lesdits moyens de fixation externes, ledit élément annulaire étant axialement symétrique par rapport à un axe de symétrie (« X »), ladite partie de retenue (64) et ladite partie de logement (61) étant centrées et symétriques par rapport au dit axe de symétrie (« X »),
- une partie de surface plate (65a) se prolongeant autour de l'axe de symétrie (« X ») pour former ledit trou passant (65) ;
- deux surfaces latérales (66) situées en correspondance des côtés de la partie de surface (65a) et des surfaces de raccordement (65b) respectives dans laquelle chaque surface de raccordement (65b) est positionnée entre la partie de surface plate (65a) et des surfaces latérales (66) respectives pour créer un raccordement unique et continu entre la partie de surface (65a) et la surface latérale (66) ; lesdites surfaces de raccordement étant des courbes continues et non des coins ou des bords ou des arêtes vives.

2. Ancre (10) selon la revendication 1, dans laquelle les surfaces latérales (66) sont plates et parallèles les unes par rapport aux autres et positionnées perpendiculairement au dit axe de symétrie (« X »), lesdites surfaces latérales (66) formant les extrémités latérales (64a, 61a) respectives de ladite partie de retenue (64) et de ladite partie de logement (61).

3. Ancre (10) selon l'une quelconque des revendications précédentes, dans laquelle la partie de surface (65a) est plate.

4. Ancre (10) selon l'une quelconque des revendications précédentes, dans laquelle ladite partie de surface (65a) est cylindrique et possède un diamètre constant, ladite partie de surface (65a) étant positionnée coaxialement par rapport au dit axe de symétrie (« X »).

5. Ancre (10) selon l'une quelconque des revendications précédentes, dans laquelle lesdites surfaces de raccordement (65b) sont conçues pour créer un raccordement entre ladite partie de surface (65a) et lesdites surfaces latérales (66) en correspondance de ladite extrémité latérale (64a) de ladite partie de retenue (64).

6. Ancre (10) selon l'une quelconque des revendications précédentes, dans laquelle lesdites surfaces de raccordement (65b) ont une forme curviligne ayant un rayon de courbure étant de préférence compris entre approximativement 5 et approximativement 25 mm, idéalement entre approximativement 10 et approximativement 20 mm.

7. Ancre (10) selon l'une quelconque des revendications précédentes, dans laquelle ledit trou passant (65) possède un diamètre ayant une valeur comprise entre approximativement 45 et approximativement 90 mm, idéalement entre approximativement 50 et approximativement 75 mm.

8. Ancre (10) selon l'une quelconque des revendications précédentes, dans laquelle ladite rainure annulaire (62) se prolonge le long de ladite surface périphérique (63) se prolongeant autour dudit axe de symétrie (« X ») et dans laquelle ladite rainure annulaire (62) comprend une base ayant un diamètre d'extension (« D ») ayant une valeur comprise entre approximativement 60 et approximativement 140 mm.

9. Ancre (10) selon l'une quelconque des revendications précédentes, dans laquelle ladite rainure annulaire (62) se prolonge le long de ladite surface périphérique (63) et dans laquelle ladite rainure annulaire (62) comprend une base ayant un diamètre d'extension (« D ») étant 2 à 10 fois supérieures au diamètre en section transversale dudit câble d'ancrage (20), de préférence ledit diamètre d'extension (« D ») étant 4,5 à 7,5 fois supérieures au diamètre dudit câble d'ancrage (20).

10. Ancre (10) selon l'une quelconque des revendications précédentes, dans laquelle ledit élément de protection mécanique (60) est en acier S235 ou supérieur.

11. Ancre (10) selon la revendication 10, dans laquelle ledit élément de protection mécanique (60) comporte un traitement de surface anti-corrosion de type galvanisé à chaud, de préférence étant galvanisé à chaud à une épaisseur de protection approximativement de plus de 55 µm.

12. Ancre (10) selon l'une quelconque des revendications précédentes, comprenant aussi une gaine de protection (40) enroulée autour de l'extérieur de ladite partie (21) dudit câble (20) et se prolongeant sur une portion de manière à recouvrir au moins ladite boucle d'ancrage (30).

13. Ancre (10) selon l'une quelconque des revendications précédentes, dans laquelle ledit élément de protection mécanique (60) comporte une épaisseur minimum (« S ») relative mesurée en correspondance de la rainure (62) radiale à l'axe de symétrie (« X ») ; ledit élément de protection mécanique (60) étant dimensionné de manière à ce que le rapport entre l'épaisseur minimum (« S ») et un diamètre (« d ») du câble soit compris entre 0,65 et 1,5.

14. Ancre (10) selon l'une quelconque des revendications précédentes, dans laquelle ledit élément de protection mécanique (60) comporte une zone à section transversale minimum respective à travers un plan de coupe radial à l'axe de symétrie (« X ») ; ledit élément de protection mécanique (60) étant dimensionné de manière à ce que le rapport entre la zone de coupe minimum et la zone de coupe du câble soit compris entre 11 et 23.
